# EUROPÄISCHE PATENTSCHRIFT

(11) **EP 0 790 169 B1**
(45) Veröffentlichungstag und Bekanntmachung des Hinweises auf die Patenterteilung: **21.03.2001**
(21) Anmeldenummer: 96117823.3
(22) Anmeldetag: 07.11.1996
(51) Int. Cl.: B61H 1/00

(54) **Bremsklotzeinheit für Schienenfahrzeuge**
Brake pad unit for railway vehicles
Unité de plaquette de frein pour véhicules ferroviaires

(30) Priorität: 16.02.1996 DE 19605853
(43) Veröffentlichungstag der Anmeldung: 20.08.1997
(73) Patentinhaber: KNORR-BREMSE Systeme für Schienenfahrzeuge GmbH, 80809 München (DE)
(72) Erfinder: Staltmeir, Josef, 80807 München (DE); Elstorpff, Marc-Gregory, Dr., 80637 München (DE); Fuderer, Erich, 82110 Germering (DE); Ernstberger, Heinrich, 80469 München (DE)

(56) Entgegenhaltungen:
- EP-A- 0 503 723
- DE-A- 2 008 137
- DE-A- 3 336 983
- US-A- 3 205 980

## Beschreibung

Die Erfindung betrifft eine Bremsklotzeinheit nach dem Gattungsbegriff des Patentanspruches 1.

Bremsklotzeinheiten der gattungsgemäßen Art dienen zum Abbremsen von Schienenfahrzeugen; sie sind am Fahrzeug- oder Drehgestellrahmen montiert und wirken mittels Bremszylinderzuspannung gegenüber der Lauffläche eines Schienenfahrzeugrades. Sie werden auch als sogenannte Putzklotzeinheiten verwendet. Diese besitzen bevorzugt bei Lokomotiven die Aufgabe, durch Brems-Reibungseingriff die Lauffläche eines Schienenfahrzeugrades frei von die Traktion reduzierenden Einflüssen zu halten, d.h. frei von Verunreinigungen, welche im Betrieb auf der Lauffläche eingepreßt werden. Eine besondere Problematik kommt hierbei der Lagefixierung der Bremsklotzeinheit zu. In Lösestellung soll der Putz- bzw. Bremsklotz nicht am Rad schleifen, sondern soll etwa parallel zur Radlauffläche gehalten werden; in Bremsstellung darf der Klotz eine Bewegung des Rades nicht behindern, sondern muß dieser folgen, z.B. beim Einfedern.

Bekannt sind Bremsklotzeinheiten der gattungsgemäßen Art, bei welchen reibschlüssige Fixierungen durch Anpressen von Reibelementen (DE-OS 33 36 983; EP-A-0 503 723) verwendet werden. Derartige reibschlüssige Fixierungen haben den Nachteil, daß eine ungewollte Verstellung der radparallelen Lage, z.B. durch starke Beschleunigungen, nicht automatisch rückgängig gemacht wird, d.h. die richtige Lage stellt sich erst nach der nächsten Bremsung wieder ein.

Des weiteren sind kraftschlüssige Fixierungen durch Vorspannen einer sich etwa parallel zum Bremsklotzkeil erstreckenden Biegefeder bekannt. Hierbei liegen die Bauelemente ungeschützt im Freien, was Verschmutzung und damit ungenaue Fixierposition zur Folge hat.

Davon ausgehend besteht die Aufgabe der Erfindung darin, eine Bremsklotzeinheit der gattungsgemäßen Art, auch in Verwendung als Putzklotzeinheit, so auszugestalten, daß eine elastische Lagerückführung bzw. -fixierung mit baulich einfachen Mitteln erzielbar ist. Im besonderen soll nach erfolgter Auslenkung des Bremsklotzschuhes eine automatische Rückführung in die Nullage ermöglicht sein. Die Anordnung soll bei kompakter Auslegung gegenüber Verschmutzungsgefahr geschützt sein.

Zur Lösung dieser Aufgabe dienen die Merkmale nach dem Kennzeichnungsteil des Patentanspruches 1.

Durch die gegen Federkraft erfolgende Auslenkung des Bremsklotzschuhs wird über das zwischen den Druckstücken wirkende Wälz- bzw. Gelenkelement ein Rückstellmoment erzeugt, welches den Bremsklotzschuh nach erfolgter Auslenkung automatisch wieder in die Nullage zurückführt. Bei Verwendung als Putzklotz für Lokomotiven stellt sich die Ausgangslage des Putzklotzschuhs absolut sicher ein, also nicht erst nach jeweils der nächsten Bremsung bzw. Putzklotzbetätigung.

Die zur elastischen Lagefixierung dienenden Bauelemente sind in absolut geschützter Lage innerhalb des Druckrohrs der Bremsklotzeinheit untergebracht, zudem ist das Schub- bzw. Druckrohr im allgemeinen durch einen elastischen Balgkörper umschlossen, welcher das Eindringen von Feuchtigkeit und Verunreinigungen verhindert.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Figur 1 ist eine Seitenansicht der Bremsklotzeinheit in vom Schienenfahrzeugrad gelöster, parallel zur Radlauffläche desselben gehaltener Position;
Figur 2 ist eine der Figur 1 vergleichbare Ansicht unter Darstellung der Bremsklotzeinheit in Anlage an der Radlauffläche bei Einfederung des die Bremsklotzeinheit tragenden (nicht dargestellten) Rahmens;
Figuren 3 und 4 sind gegenüber den Figuren 1 und 2 vergrößert wiedergegebene Schnittansichten der Bremsklotzeinheit in Normallage und in verschwenkter Lage; und
Figuren 5 und 6 sind verkleinerte Teilschnittansichten der Bremsklotzeinheit unter Darstellung verschiedener Ausführungsformen von Endanschlägen zur Begrenzung des maximalen Schwenkwinkels des Bremsklotzschuhes.

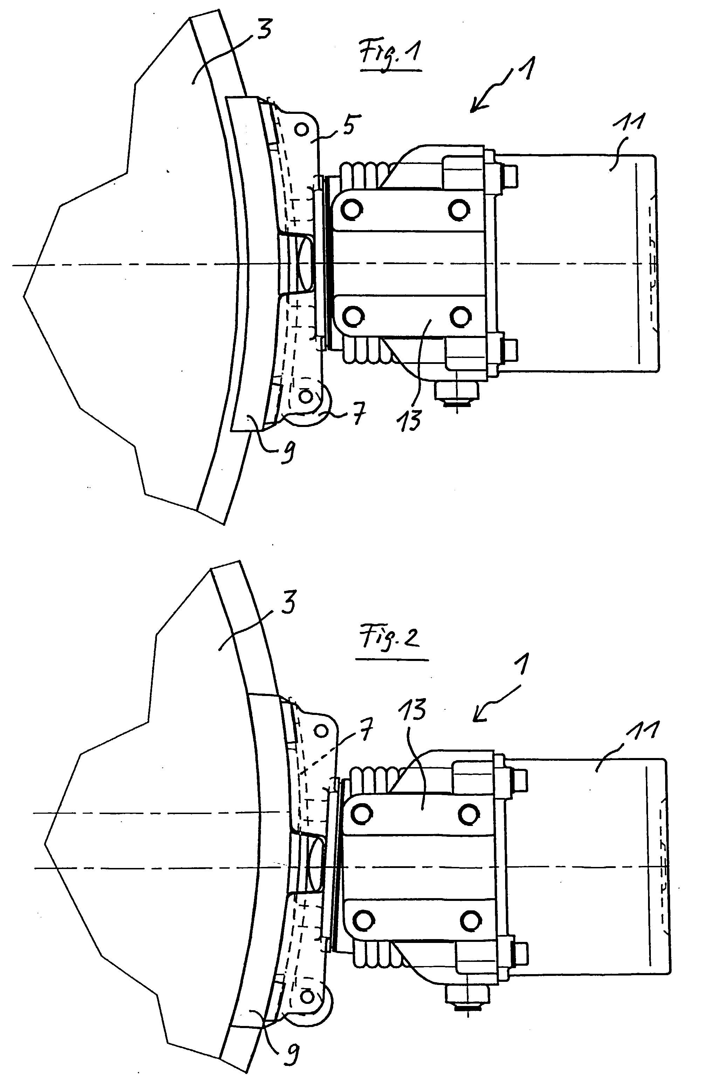

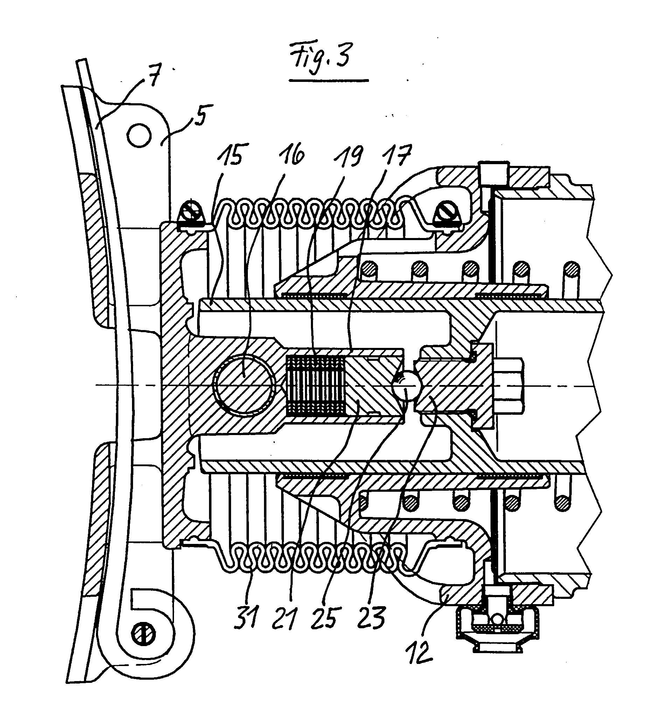

Die in Figur 1 und 2 dargestellte Bremsklotzeinheit 1 ist einem Rad 3 eines Schienenfahrzeuges zugeordnet und weist einen Bremsklotzschuh 5, einen am Bremsklotzschuh 5 z.B. mittels einer Feder 7 gehalterten Bremsklotz (Putzklotz) 9 und einen zur Betätigung dienenden Bremszylinder 11 auf. Die Bremsklotzeinheit 1 ist mittels eines in Figur 1 und 2 in Seitenansicht wiedergegebenen, mit einem Gehäuse 12 verbundenen Flansches 13 an einem (nicht dargestellten) Fahrzeug- oder Drehgestellrahmen des Schienenfahrzeuges befestigt; die Bremsklotzeinheit 1 ist auf diese Weise mit dem Fahrzeug- bzw. Drehgestellrahmen relativ zum Rad 3 höhenverlagerbar, wie aus einem Vergleich der Figuren 1 und 2 hervorgeht.

In Figur 1 ist die Lösestellung der Bremsklotzeinheit 1 dargestellt, in welcher sich die Längsachse der Einheit im wesentlichen in waagerecht-mittiger Position bezüglich der Radachse befindet, während in der Position nach Figur 2 die eingefederte Lage
der Bremsklotzeinheit 1 während des Bremsens dargestellt ist. Ein Vergleich der Figuren 1 und 2 veranschaulicht, daß die Bremsklotzeinheit in der Lösestellung nicht am Rad 3 schleift, d.h. Abstand zu diesem besitzt, und in der eingefederten Position die Bewegung des Rades 3 nicht behindert, sondern dieser mittels nachfolgend erläuterter Schwenklagerung folgt.

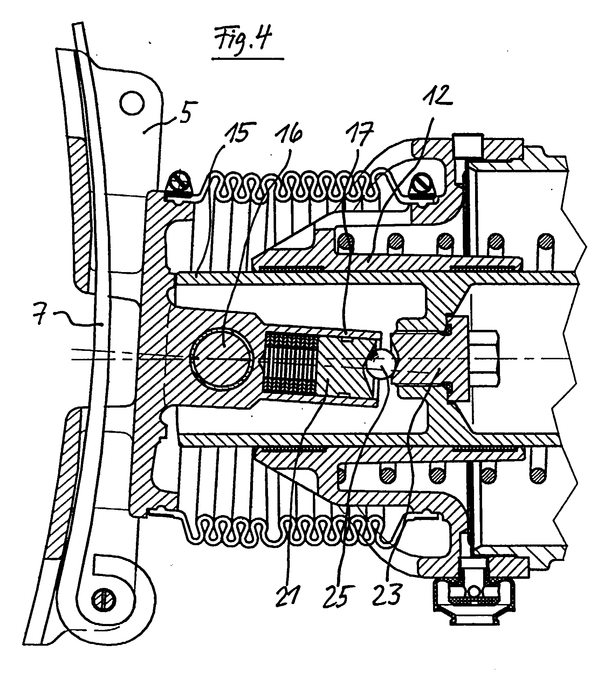

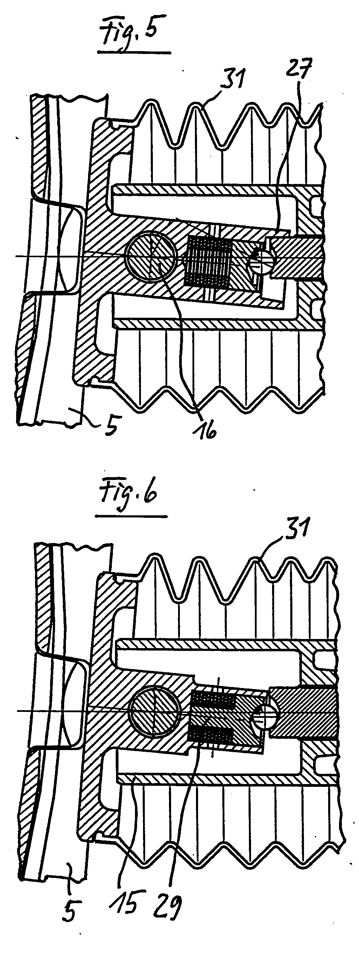

In den Figuren 3-6 sind nachfolgend die baulichen Mittel dargestellt, welche die elastische Lagefixierung des Bremsklotzschuhes 5 nach Maßgabe der Gegebenheiten der Figuren 1 und 2 ermöglichen. Gemäß Figur 3 ist die Bremsklotzeinheit 1 mit einem im Gehäuse 12 verschiebbaren Druckrohr 15 versehen, an welchem der Bremsklotzschuh 5 mittels eines Bolzens 16 schwenkbar angelenkt ist. Das Druckrohr 15 steht in nicht dargestellter Weise mit dem Bremszylinder 11 bzw. dessen Betätigungsorgan in Verbindung und überträgt bei Bremsbetätigung die die Bremsklotzeinheit in Richtung des Rades verschiebenden Druckkräfte. Der Bremsklotzschuh 5 ist innerhalb des Druckrohres 15 mit einem Führungsrohr 17 versehen, in welches unter Verspannung durch eine Feder 19 ein Druckstück 21 eingesetzt ist. Das Druckstück ist entlang einer Verschiebeachse bewegbar, die etwa durch die Mitte des Bolzens 16 verläuft. Ein weiteres Druckstück 23 ist im Inneren des Druckrohres in achsmittiger Lage fixiert. Im dargestellten Ausführungsbeispiel ist das Druckstück 23 in ein achsmittig im Druckrohr 15 befindliches Gewinde eingeschraubt. Die beiden Druckstücke 21 und 23 sind in einander zugewandter Lage kegelförmig angesenkt und führen zwischen sich eine Kugel 25, welche durch die Feder 19 verspannt ist. Bei Auslenkung des Bremsklotzschuhes 5 aus seiner in Figur 3 dargestellten Nullage rollt die Kugel 25 aus ihrer tiefsten Lage entlang zweier Kegelflächen, wodurch die z.B. aus Tellerfedern gebildete Feder 19 (Figur 4) bei Verschiebung des Druckstückes 21 komprimiert wird. Die Kugel läuft demnach auf den Kegelflächen auf und komprimiert die Feder 16, wenn eine Verschwenkung des Bremsklotzschuhes aus der Lage nach Figur 3 in die Lage nach Figur 4 vollzogen wird. Die Feder 19 vermittelt also eine durch ihre Verspannung erzeugte federnde Rückstellkraft, welche die Neigung besitzt, den Bremsklotzschuh 5 nach Freigabe vom Rad in die in Figur 3 dargestellte Ausgangslage zurückzuverschwenken.

In der Ausführungsform nach Figur 3 und 4 ist die Feder 19 aus Tellerfedern gebildet, welche bei Komprimierung durch das Druckstück 21 "auf Block" gehen können, wobei durch den zwischen den Druckstücken bestehenden Winkel der kegelförmigen Ansenkung die Endlage für die Begrenzung des maximalen Schwenkwinkels vermittelt wird. In den Figuren 5 und 6 sind weitere Ausführungsformen für den Endanschlag und für die Ausgestaltung der Feder 19 wiedergegeben. Gemäß Figur 5 ist das Führungsrohr 17 mit einer über die Kugel 25 sich erstreckenden Verlängerung 27 versehen, welche als Anschlag für das Druckstück 23 dient und hierdurch die Endposition für den Schwenkwinkel vermittelt. In Figur 6 ist eine der Ausführungsform nach Figur 3 und 4 vergleichbare Anordnung wiedergegeben, bei welcher jedoch das Druckstück 21 mit einer in Richtung des Bolzens 16 sich erstreckenden, im
Inneren des Führungsrohrs 17 zur Anlage gelangenden Fortsatz 29 versehen ist. Dieser bestimmt die Endlage des längsverschieblichen Druckstückes 21, wodurch gleichzeitig die Endposition des Schwenkwinkels für den Bremsklotzschuh festgelegt ist. Die Schwenkwinkel-Endposition kann auch dadurch festgelegt sein, daß sich der Bremsklotzschuh mittels eines rückwärtigen Anschlagelementes am Ende des Druckrohres anlegt (Fig. 4).

In einer zweckmäßigen Ausgestaltung der erfindungsgemäßen Anordnung kann die Feder 19 auch ein dem Druckstück 23 vergleichbares Bauteil abstützen, welches relativ zum Druckrohr 15 verschiebbar ist. Die Erfindung ist auch nicht auf die dargestellte Ausführungsform mit kegelförmiger Ansenkung der Druckstücke und auf die Verwendung der Kugel 25 beschränkt. So kann anstelle der Kugel eine Walze vorgesehen sein und die Ansenkungen der Druckstücke können z.B. prismatisch geformt sein. Grundsätzlich könnte die Kugel auch durch eine fest am Druckstück 21 oder 23 angebrachte Reibfläche ersetzt werden; hierbei wäre jedoch erhöhter Verschleiß infolge Reibung in Kauf zu nehmen.

Die Anordnung zur elastischen Lagefixierung des Bremsklotzschuhs ist innerhalb des Druckrohr 15 befindlich erläutert. Dies vermittelt den wesentlichen Vorteil, daß weitgehender Schutz gegenüber Verunreinigungen im Betrieb gewährleistet ist.

Ein weiterer zusätzlicher Vorteil ist in der Verwendung des Balgs 31 zu sehen, welcher bei Befestigung am Bremsklotzschuh und am Gehäuse 12 eine im wesentlichen vollständige Abdichtung des Inneren der vorstehend erläuterten Bauteile ermöglicht, so daß die Funktionsfähigkeit störungsfrei jederzeit sichergestellt ist.

### Bezugszeichenliste

- 1: Bremsklotzeinheit
- 3: Rad
- 5: Bremsklotzschuh
- 7: Feder
- 9: Bremsklotz/Putzklotz
- 11: Bremszylinder
- 12: Gehäuse
- 13: Flansch
- 15: Druckrohr
- 16: Bolzen
- 17: Führungsrohr
- 19: Feder
- 21: Druckstück
- 23: Druckstück
- 25: Kugel
- 27: Verlängerung
- 29: Fortsatz
- 31: Balg

## Patentansprüche

1. Bremsklotzeinheit für Schienenfahrzeuge, mit einem mit einem Bremszylinder verbindbarem, bei Bremsbetätigung verschiebbaren Druckkörper (15), an dessen dem Rad des Schienenfahrzeuges zuwendbarem Ende mittels eines Lagerelements (16) ein einen Brems- oder Putzklotz tragender Bremsklotzschuh (5) schwenkbar angelenkt ist, derart, daß bei Bremsbetätigung die Druckkraft vom Bremszylinder über das Lagerelement (16) auf den Bremsklotzschuh (5) übertragbar ist, **gekennzeichnet durch** folgende Merkmale:
a) der Druckkörper ist als ein Druckrohr (15) ausgebildet;
b) der Bremsklotzschuh (5) weist in rückwärtiger Verlängerung zu dem ihn schwenkbar tragenden Lagerelement (16) ein Druckstück (21) auf, welches sich mittels eines Gelenkes (25) an einem im Druckrohr (15) gehaltenen weiteren Druckstück (23) abstützt; und
c) wenigstens eines der Druckstücke (21; 23) ist unter Federverspannung relativ zum anderen Druckstück begrenzt beweglich, derart, daß das Gelenk Schwenkbewegungen des Bremsklotzschuhes (5) mit Rückstellmoment zuläßt.

2. Bremsklotzeinheit nach Anspruch 1, **dadurch gekennzeichnet**, daß das den Bremsklotzschuh (15) tragende Lagerelement aus einem Bolzen (16) besteht, welcher quer zur Längsachse des Druckrohres (15) sich erstreckend am Ende desselben gehalten ist.

3. Bremsklotzeinheit nach Anspruch 2, **gekennzeichnet durch** folgende Merkmale:
a) in bezüglich des Bolzens (16) rückwärtiger Verlängerung erstreckt sich vom Bremsklotzschuh (5) ein Führungsrohr (17) im Inneren des Druckrohres (15);
b) in das Führungsrohr (17) ist unter Abstützung durch eine Feder (19) das Druckstück (21) verschiebbar eingesetzt; und
c) das zwischen den Druckstücken (21, 23) befindliche Gelenk ist aus einem Wälzelement gebildet, welches unter Verspannung durch die auf das Druckstück (21) einwirkende Feder (19) zwischen den einander zugewandten Wälzflächen der beiden Druckstücke gefesselt ist.

4. Bremsklotzeinheit nach Anspruch 3, **gekennzeichnet durch** folgende Merkmale:
a) das Wälzelement besteht aus einer Kugel (25); und
b) die beiden Druckstücke (21, 23) sind auf ihren einander zugewandten Flächen mit kegelförmigen Ansenkungen versehen, in welchen die Kugel (25) geführt ist, derart, daß bei Verschwenkung des Bremsklotzschuhes ber die Kegelflächen mittels der Kugel (25) eine Verspannung der Feder (19) und hierdurch ein Rückstellmoment erzeugbar ist.

5. Bremsklotzeinheit nach Anspruch 4, **dadurch gekennzeichnet,** daß das im Inneren des Druckrohres gehaltene Druckstück (23) in ein mittig im Druckrohr gehaltenes Gewinde eingeschraubt ist, derart, daß mittels des Druckstücks (23) über die Kugel (25) und das erste Druckstück (21) die Feder (19) spannbar ist.

6. Bremsklotzeinheit nach einem der vorangehenden Ansprüche, **dadurch gekennzeichnet,** daß das in der rückwärtigen Verlängerung des Bremsklotzschuhes befindliche Druckstück (21) fixiert ist, und daß das vom Druckrohr (15) getragene Druckstück (23) gegen Federkraft begrenzt verschiebbar ist.

7. Bremsklotzeinheit nach einem der vorangehenden Ansprüche, **dadurch gekennzeichnet,** daß zwischen den beiden Druckstücken (21, 23) zur Begrenzung des maximalen Schwenkwinkels dienende Endanschläge vorgesehen sind.

8. Bremsklotzeinheit nach einem der vorangehenden Ansprüche, **dadurch gekennzeichnet,** daß die gegen Federkraft bestehende Verschieblichkeit des Druckstücks (21; 23) durch einen achsialen Endanschlag begrenzt ist.

## Claims

1. Brake-block unit for rail vehicles, having a pressure body (15) which can be connected to a brake cylinder and is displaceable during brake application, on the end of which pressure body that can face the wheel of the rail vehicle is pivotably mounted by means of a bearing element (16) a brake-block shoe (5) which carries a brake block or cleaning block, in such a way that in the event of brake application, the compressive force can be transmitted from the brake cylinder via the bearing element (16) on to the brake-block shoe (5), characterised by the following features:
a) the pressure body is constructed as a pressure tube (15);
b) in a backward extension with respect to the bearing element (16) which carries it in a manner such that it can pivot, the brake-block shoe (5) has a pressure piece (21), which, by means of a joint (25), is supported on a further pressure piece (23) which is held in the pressure tube (15); and
c) at least one of the pressure pieces (21; 23) is movable to a limited extent relative to the other pressure piece under spring tension, in such a way that the joint allows pivoting movements of the brake-block shoe (5) with restoring moment.

2. Brake-block unit according to claim 1, characterised in that the bearing element which carries the brake-block shoe (5) comprises a pin (16) which is held on the end of the pressure tube (15) in a manner such that it extends at right angles to the longitudinal axis thereof.

3. Brake-block unit according to claim 2, characterised by the following features:
a) in a backward extension with respect to the pin (16), there extends from the brake-block shoe (5) a guide tube (17) inside the pressure tube (15);
b) inserted into the guide tube (17) in a manner such that it can be displaced, supported by a spring (19), is the pressure piece (21); and
c) the joint located between the pressure pieces (21, 23) is formed from a rolling element which, tensioned by the spring (19) which acts on the pressure piece (21), is confined between the rolling faces of the two pressure pieces, which rolling faces face each other.

4. Brake-block unit according to claim 3, characterised by the following features:
a) the rolling element comprises a sphere (25); and
b) on their faces which face each other, the two pressure pieces (21, 23) are provided with conical countersinkings in which the sphere (25) is guided, in such a way that when the brake-block shoe is pivoted over the conical surfaces by means of the sphere (25), a tensioning of the spring (19), and as a result of this a restoring moment, can be generated.

5. Brake-block unit according to claim 4, characterised in that the pressure piece (23) held inside the pressure tube is screwed into a thread held centrally in the pressure tube, in such a way that by means of the pressure piece (23), by way of the sphere (25) and the first pressure piece (21), the spring (19) can be tensioned.

6. Brake-block unit according to one of the preceding claims, characterised in that the pressure piece (21) located in the backward extension of the brake-block shoe is fixed, and in that the pressure piece (23) carried by the pressure tube (15) can be displaced to a limited extent against spring resistance.

7. Brake-block unit according to one of the preceding claims, characterised in that limit stops used to limit the maximum pivoting angle are provided between the two pressure pieces (21, 23).

8. Brake-block unit according to one of the preceding claims, characterised in that the displaceability of the pressure piece (21; 23) that exists against spring resistance is limited by an axial limit stop.

## Revendications

1. Unité de sabot de frein pour véhicules ferroviaires, comportant un élément (15) de pression pouvant être relié à un cylindre de frein et coulissant lors d'un actionnement du frein, un patin (5) de sabot de frein, portant une plaquette de frein ou de nettoyage étant, au moyen d'un élément (16) formant palier, articulé avec possibilité de basculement à l'extrémité de l'élément (15) de pression pouvant être tournée vers la roue du véhicule ferroviaire, de telle manière que, lors d'un actionnement du frein, la force de pression du cylindre de frein peut être transmise au patin (5) de sabot de frein par l'intermédiaire de l'élément (16) formant palier, caractérisée par les caractéristiques suivantes :
a) l'élément de pression est réalisé sous la forme d'un tube (15) de pression ;
b) le patin (5) de sabot de frein comporte, dans le prolongement arrière par rapport à l'élément (16) formant palier le portant avec possibilité de basculement, une pièce (21) de pression qui, au moyen d'une articulation (25), prend appui sur une pièce (23) de pression supplémentaire contenue dans le tube (15) de pression; et
c) au moins l'une des pièces (21 ; 23) de pression est mobile par rapport à l'autre pièce de pression de manière limitée avec déformation élastique, de sorte que l'articulation permet des mouvements de bascule du patin (5) de sabot de frein par un couple de rappel.

2. Unité de sabot de frein suivant la revendication 1, caractérisée en ce que l'élément formant palier portant le patin (5) de sabot de frein est constitué d'un axe (16), qui est maintenu perpendiculairement à l'axe longitudinal du tube (15) de pression en s'étendant à l'extrémité de celui-ci.

3. Unité de sabot de frein suivant la revendication 2, caractérisée par les caractéristiques suivantes :
a) un tube (17) de guidage s'étend à l'intérieur du tube (15) de pression, à partir du patin (5) de sabot de frein, dans le prolongement vers l'arrière par rapport à l'axe (16);
b) la pièce (21) de pression est introduite dans le tube (17) de guidage de manière à pouvoir coulisser en prenant appui sur un ressort (19) ; et
c) l'articulation se trouvant entre les pièces (21 ; 23) de pression est formée d'un élément formant tambour qui est bloqué entre les surfaces de tambour des deux pièces de pression se faisant face mutuellement avec déformation du ressort (19) agissant sur la pièce (21) de pression.

4. Unité de sabot de frein suivant la revendication 3, caractérisée par les caractéristiques suivantes :
a) l'élément formant tambour est constitué d'une boule (25); et
b) les deux pièces (21 ; 23) de pression sont munies de chanfreins en forme de cône sur leurs surfaces tournées mutuellement l'une vers l'autre, chanfreins dans lesquels la boule (25) est guidée, de sorte que, lors d'un basculement du patin de sabot de frein, il peut être produit au niveau des surfaces coniques, au moyen de la boule (25), une déformation du ressort (19) et ainsi un couple de rappel.

5. Unité de sabot de frein suivant la revendication 4, caractérisée en ce que la pièce (23) de pression contenue à l'intérieur du tube de pression est vissée dans un taraudage ménagé au milieu du tube de pression, de sorte que le ressort (19) peut, au moyen de la pièce (23) de pression, être tendu par l'intermédiaire de la boule (25) et de la première pièce (21) de pression.

6. Unité de sabot de frein suivant l'une des revendications précédentes, caractérisée en ce que la pièce (21) de pression se trouvant dans le prolongement vers l'arrière du patin de sabot de frein est immobilisée, et en ce que la pièce (23) de pression portée par le tube (15) de pression peut coulisser de manière limitée à l'encontre de la force du ressort.

7. Unité de sabot de frein suivant l'une des revendications précédentes, caractérisée en ce que des butées d'extrémité servant à limiter l'angle de basculement maximum sont prévues entre les deux pièces (21 ;23) de pression.

8. Unité de sabot de frein suivant l'une des revendications précédentes, caractérisée en ce que le coulissement de la pièce (21 ; 23) de pression à l'encontre de la force du ressort est limité par une butée d'extrémité axiale.
